# EUROPÄISCHE PATENTSCHRIFT

(11) **EP 2 392 241 B1**
(45) Veröffentlichungstag und Bekanntmachung des Hinweises auf die Patenterteilung: **16.01.2019**
(21) Anmeldenummer: 11168315.7
(22) Anmeldetag: 31.05.2011
(51) Int. Cl.: A47J 31/52

(54) **Verfahren zum Steuern und/oder Überwachen des Brühvorganges einer Kaffeemaschine**
Process for controlling and/or monitoring the cooking process of coffee with a coffee machine
Procédé de commande et/ou de surveillance du processus d'ébouillantage d'une machine à café

(30) Priorität: 02.06.2010 DE 102010017224
(43) Veröffentlichungstag der Anmeldung: 07.12.2011
(73) Patentinhaber: Bülent, Yilmaz, 87471 Durach (DE)
(72) Erfinder: Bülent, Yilmaz, 87471 Durach (DE)
(74) Vertreter: Hutzelmann, Gerhard

(56) Entgegenhaltungen:
- WO-A1-2007/000195
- WO-A2-2009/033106
- GB-A- 2 219 194
- US-A- 5 568 763
- US-A1- 2008 017 041
- US-A1- 2009 205 502
- US-A1- 2010 086 654

## Beschreibung

Die Erfindung bezieht sich auf ein Verfahren zum Steuern und/oder Überwachen des Brühvorganges von Siebträger-Kaffeemaschinen. US2010/0086654 offenbart ein Verfahren zum Steuern und Überwachen des Brühvorganges. Der Erfindung liegt die Aufgabe zugrunde, den Ablauf des Brühvorganges bei derartigen Kaffeemaschinen weitgehend zu automatisieren und den Brühvorgang bei jedem einzelnen Brühvorgang möglichst optimal auszuführen.

Diese Aufgabe wird erfindungsgemäß mit den technischen Merkmalen des Anspruchs 1 gelöst.

Damit wird sichergestellt, daß immer der erforderliche Mahlgrad und/oder die erforderliche Mahlmenge für einen optimalen Brühvorgang zur Verfügung steht.
Erfindungsgemäß ist darüber hinaus ein Eingabe-Terminal vorgesehen, mit dem das zu erstellende Produkt auswählbar ist.
Hiermit kann über das Eingabe-Terminal und den Siebträger der komplette Ablauf der Getränkeherstellung vorgewählt werden. Es ist auch denkbar, daß Hilfestellungen und Hinweise zum Ablauf der Zubereitung gegeben werden. Ebenso können Systemmeldungen zum Beispiel zum Zustand des Systems ausgegeben werden. Die Erfassung und Darstellung von statistischen Werten ist denkbar.
Dabei ist es besonders vorteilhaft, wenn erfindungsgemäß bei Eingabe des gewünschten Produktes der jeweils zu verwendende Siebträger angegeben wird.
Damit ist über das Verfahren in Abhängigkeit von der Produktauswahl am Terminal der Siebträger festgelegt. Dieser kann dann beispielsweise seinerseits den Programmablauf steuern.
Erfindungsgemäß kann auch vorgesehen sein, dass bei Eingabe des gewünschten Produktes angegeben wird, welcher Kaffeemühle bzw. welchem Kaffee-Vorrat der Siebträger zuzuordnen ist.

Damit ist auch dieser Schritt im Herstellungsprozess des Kaffeegetränkes festgelegt. Bei der Auswahl unterschiedlicher Kaffeesorten können keine Fehler mehr gemacht werden.

Eine weitere vorteilhafte Ausgestaltung der Erfindung ist dadurch gekennzeichnet, dass eine Steuereinrichtung vorgesehen ist, welche bei Auswahl des gewünschten Produktes und Einsatz des notwendigen Siebträgers die für das Produkt vorgesehenen Parameter steuert.

Damit wird sichergestellt, daß immer nur die für das jeweilige Produkt nötigen Komponenten eingesetzt und die dafür vorgesehenen Parameter eingehalten werden.

Erfindungsgemäß kann desweiteren vorgesehen sein, dass externe Parameter, wie Luftfeuchtigkeit, Raumtemperatur, Nutzung usw. erfasst und insbesondere den Mahlgrad und/oder die Mahlzeit, die Umdrehungszahl der Mühle bzw. die Mahlmenge und/oder die Aufheizung steuern.

Dadurch wird sichergestellt, daß bei schwankenden Parametern, was durchaus auch im Laufe eines Tages passieren kann, trotzdem ein optimales Brühergebnis erzielt wird. Zudem kann in Abhängigkeit der Nutzung die Anzahl der aktiven Brühgruppen variiert und so Energie eingespart werden. Durch eine gezielte Abschaltung der Brühgruppen in Zeiten geringer Nutzung wird nicht nur Energie eingespart, sondern auch die Aufheizung des Aufstellungsraumes verringert werden. Bei allen erfassten Parametern können sowohl kurz-, mittel- und langfristige Überwachungen vorgenommen werden, bei denen jeweils eine Mittelwertbildung möglich ist. Durch die Überwachung und/oder die kurz-, mittel- und langfristigen Mittelwerte kann eine selbstlernende Anpassung vorgesehen werden.

Eine weitere vorteilhafte Ausgestaltung des erfindungsgemäßen Verfahrens liegt darin, dass ein Vorbrühvorgang eingerichtet wird.

Dadurch wird das Kaffeemehl bereits vor dem eigentlichen Brühvorgang vorbenetzt, was zu einer besseren Ausnutzung des Kaffeemehls führt. Zudem ist denkbar, daß der Vorbrühvorgang mit heißem Dampf ausgeführt wird.

Eine weitere vorteilhafte Ausgestaltung der Erfindung ist dadurch gekennzeichnet, dass die Kaffee-Vorräte überwacht werden.

Damit ist sichergestellt, dass immer genügend Kaffeebohnen im jeweiligen Mahlwerk zur Verfügung stehen.

Erfindungsgemäß kann zur Überwachung des Kaffeevorrates eine Lichtschranke oder dgl. vorgesehen sein.

Es ist gemäß einer weiteren Ausgestaltung der Erfindung jedoch auch möglich, dass zur Überwachung des Kaffeevorrates die Laufzeit und/oder die Umdrehungszahl der Kaffeemühle ermittelt wird.

Hiermit ist eine sehr genaue Überwachung und Protokollierung des Kaffeeverbrauches möglich.

Gemäß einer weiteren vorteilhaften Ausgestaltung der Erfindung sind zum Einstellen des Mahlgrades Servomotoren vorgesehen, mit denen der Abstand der Mahlmesser und damit der Mahlgrad eingestellt werden kann.

Damit ist eine sehr effiziente Einstellung des Mahlgrades ermöglicht. Aber auch eine nicht automatisierte Einstellung des Mahlgrades ist denkbar.

Eine weitere sehr vorteilhafte Ausgestaltung des erfindungsgemäßen Verfahrens ist dadurch gekennzeichnet, dass die Laufzeiten und/oder die Umdrehungszahlen der Kaffeemühlen erfasst werden und in Abhänigkeit hiervon eine Reinigung der Mühle eingeleitet wird.

Damit wird gewährleistet, dass die jeweilige Kaffeemühle immer einsatzbereit ist und eine gleichbleibende Qualität liefert.

Gemäß einer weiteren Ausgestaltung der Erfindung ist auch vorgesehen, dass die Ausgabe-Einheiten automatisch gereinigt werden, wobei als Parameter hierfür die Anzahl der Ausgabe-Vorgänge und/oder die Zeit seit der letzten Reinigung herangezogen wird.

Auch dies dient dem störungsfreien automatischen Ablauf des jeweiligen Brühvorganges bei gleichbleibender Qualität.

Als sehr vorteilhaft hat es sich auch erwiesen, wenn erfindungsgemäß die Laufzeit, die Zahl der Umdrehungen und/oder die Anzahl der Mahlvorgänge erfasst und in Abhängigkeit hiervon ein notwendiger Austausch der Mahlwerkzeuge signalisiert wird.

Auch hierdurch lässt sich ein störungsfreier Ablauf der Kaffeezubereitung erreichen.

Des weiteren kann erfindungsgemäß vorgesehen werden, dass unterschiedliche Zugangsberechtigungen für die Kaffeemaschine vorgesehen sind.

Hiermit wird erreicht, dass nur der jeweils berechtigte Personenkreis Programme ändern, Austausch- und Servicearbeiten und grundlegende Veränderungen vornehmen kann. Ein größerer Personenkreis kann dagegen zur Entnahme der vorgesehenen Produkte berechtigt sein. Zudem ist ein Abrechnungssystem denkbar, das einerseits automatisch die ausgegebenen Getränke erfasst und andererseits Abrechnungen erstellt. Dabei besitzen nicht alle Nutzer notwendigerweise dieselben Zugangsberechtigungen, so daß zum Beispiel nur der Besitzer oder Geschäftsführer Umsatzzahlen und/oder Abrechnungsdaten auslesen darf.

Das erfindungsgemäße Verfahren soll anhand einer Prinzipskizze nachfolgend erläutert werden.

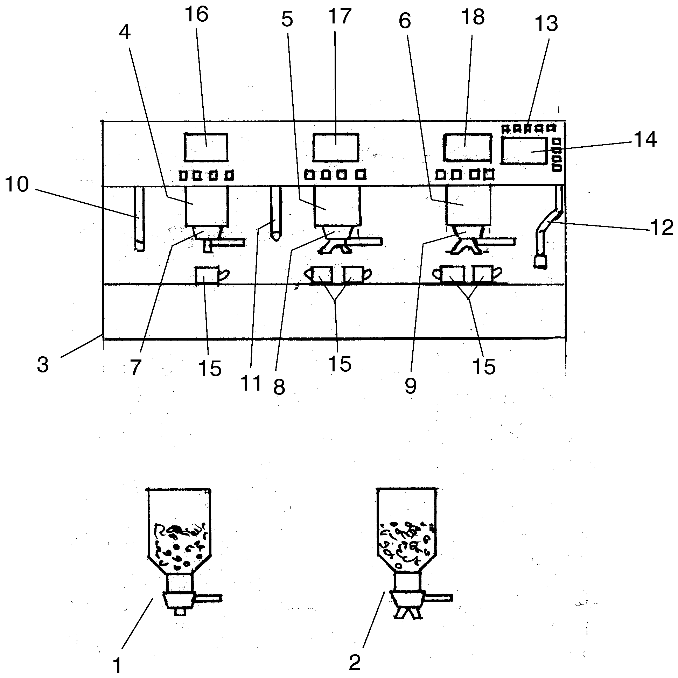

In der Figur sind zwei Kaffeemühlen 1 und 2 sowie eine Siebträgerkaffeemaschine 3 schematisch dargestellt. Kaffeemühlen können soviele vorgesehen werden, wie Kaffeesorten zur Verfügung stehen sollen.

Auch Mehrfachmühlen sind denkbar, die nach erforderlicher Kaffeesorte jeweils die Bohnen aus dem jeweiligen Vorrat entnehmen. Dabei ist beispielsweise eine Art Revolvermagazin denkbar, wobei jeweils ein Vorratsbehälter über das Mahlwerk geschoben wird. Dies kann manuell oder automatisch erfolgen.

Die Siebträgerkaffeemaschine 3 ist mit drei Anschlüssen 4,5 und 6 für Siebträger 7, 8, 9 versehen, es sind jedoch mehr oder weniger Anschlüsse möglich. Darüber hinaus ist noch ein Turbinenkopf 10 für Milchschaum, eine Düse 11 für Dampf zum Aufschäumen von Milch sowie eine Düse 12 für heißes Wasser z.B. zum Zubereiten von Tee vorgesehen.

Über ein Eingabe-Terminal 13 mit Anzeige 14 kann das gewünschte Kaffee-Getränk ausgewählt werden. In der Anzeige wird dann sichtbar, welche der Aufnahmen, welcher Siebträger und welche Kaffeemühle verwendet werden soll.

Der entsprechende Siebträger wird dann an die entsprechende Kaffeemühle gebracht und die Kaffeemühle aktiviert, wobei eine manuelle oder automatische Aktivierung denkbar ist. Nach einem Einpressen des Kaffeepulvers in den Siebträger wird dieser an die vorher bestimmte Aufnahme 4, 5 oder 6 gebracht und dort angeschlossen. Das Einpressen, das Tampen kann dabei nach dem aufgewendeten Druck, der Presszeit oder anderen möglichen Parametern überwacht werden. Hierzu kann ein manueller oder auch ein automatischer Tamper vorgesehen werden, der beispielsweise an der Kaffeemühle angebracht sein kann. Aber auch eine separate Anordnung ist denkbar. Der Tamper kann als Standard Tamper, als Klick-Tamper, der eine akustische und/oder taktile Rückmeldung über das Erreichen des erforderlichen Pressdruckes gibt, als Hebeltamper oder eben als Automatik-Tamper ausgeführt sein.

In diesem Zusammenhang ist es denkbar, daß der Brühvorgang erst dann freigegeben wird, wenn das Tampen erkannt wurde.

Der Siebträger aktiviert nunmehr die Wasserzufuhr zum Kaffeepulver, wobei zuerst nur eine geringe Menge Wasser zum Pulver gelangen kann um dieses anzufeuchten. Der Einsatz von Heißdampf ist hierbei auch denkbar. Dann wird die vorgesehene Menge heißen Wassers durch das Kaffeepulver bzw. den Siebträger geleitet. Die Siebträger können entweder mit einer Auslaufdüse wie beim Siebträger 7 dargestellt oder mit zwei Auslaufdüsen, wie bei den Siebträgern 8 oder 9 dargestellt, versehen sein. Der fertige Kaffee läuft dementsprechend in eine oder in zwei Tassen 15.

Soll dem Kaffee Milchschaum zugeführt werden, so bestehen wieder zwei Möglichkeiten:
Entweder es wird aus dem Turbinenkopf für Milchschaum 10 direkt geschäumte Milch dem Kaffee zugeführt oder es wird mittels eines nicht dargestellten, Milch enthaltendes Gefäßes Milch an der Düse 11 aufgeschäumt und dann der so hergestellte Schaum auf den Kaffee gegeben. Auch eine spezielle Automatikdüse für die Herstellung von Milchschaum ist denkbar.

Angedeutet sind am Brühautomaten 3 noch den Aufnahmen 4, 5 und 6 zugeordnete Bedienfelder 16, 17,18, über die die Aufnahmen direkt angesteuert werden können. Auch die Anzeige von Meldungen und Empfehlungen ist an diesen Bedienfeldern 16, 17 und 18 denkbar. Die Bedienfelder 16, 17 und 18 können dafür Signallampen, aber auch ein Text- oder Grafikdisplay aufweisen.

Aus der Düse 12 kann noch zusätzlich heißes Wasser entnommen werden, das beispielsweise zur Tee Zubereitung verwendet wird.

Das Eingabe-Terminal 13 dient einmal zum Auswählen des gewünschten KaffeeGetränkes wobei in der Anzeige 14 dann alle zu verwendenden Teile wie Siebträger, Kaffeemühle, Aufnahme für den Siebträger sowie eventuell zu verwendende Düse festgelegt werden können. Ein manuelles Überspringen der Empfehlungen ist denkbar, wobei dabei auch Unterschiede zwischen unterschiedlichen Zugangsberechtigungen gemacht werden können.

Das Eingabe-Terminal kann jedoch noch zusätzliche Funktionen ausführen.

Z.B. können die Abrechnungen für ausgegebene Getränke überprüft werden.

Ebenso können Anweisungen und Hilfestellungen für die Zubereitung verschiedenster Getränke gegeben werden. So ist es auch vergleichsweise ungeübten Bedienern möglich, vielfältige Kaffeespezialitäten zuzubereiten.

Zudem wird die Kaffeezubereitung ständig kontrolliert und die einstellbaren Parameter wie Brühdruck, Kaffeemenge, Mahlgrad usw. überprüft und gegebenenfalls reguliert.

Diese Parameter werden weitgehend selbstlernend angepasst um das Brühergebnis immer auf einem möglichst hohen Qualitätsniveau zu halten. Dabei können beispielsweise kurz-, mittel- und langfristige Mittelwerte herangezogen werden. Aber auch anderweitige kurz-, mittel- und langfristige Überwachungsmethoden sind denkbar, um beispielsweise auf solche Veränderungen reagieren zu können und daraus resultierende Abweichungen ausgleichen zu können. Bei einer Auswertung der Mittelwerte können beispielsweise auch Abweichungen und Sicherheiten berücksichtigt werden.

In die Anpassungen können auch tageszeitlich oder wöchentlich bedingte Schwankungen in der Umgebungstemperatur oder der Luftfeuchtigkeit einfliessen. Auch eine Anpassung der Aufheizung der Maschine ist denkbar. In vorhersehbaren Zeiten schwacher Auslastung ist es denkbar, einzelne Brühgruppen abzuschalten und so ein Energiemanagement mit einem Energieeinspareffekt zu erzeugen.

Ein solches Energiemanagement kann selbstlernend ausgeführt sein und auf den oben genannten Überwachungen und Mittelwerten beruhen. Ein kurzfristiges Reaktivieren der abgeschalteten Brühgruppen bei plötzlicher höherer Auslastung ist zum Beispiel durch Tastendruck oder Selbsterkennung denkbar.

Zudem ist es denkbar, daß auch Tagesabläufe mit einfliessen. So kann beispielsweise beim morgentlichen Anheizen der Kaffeemaschine zunächst die Brühgruppe zum Beispiel durch heißes Wasser vorgewärmt werden. Auch kann in Tageszeiten mit geringerem Durchsatz der der Energieverbrauch angepasst werden.

Wiederkehrende Schwankungen können eingelernt oder selbständig erkannt werden und dann bei der Anpassung der Parameter berücksichtigt werden.

Reinigungs- und Wartungsintervalle können hier auf Anforderung oder automatisch angezeigt werden. Es ist auch denkbar, daß anstehende Wartungen angezeigt werden und wenn diese nicht eingehalten werden, die Kaffeemaschine gesperrt wird.

Auch sind Änderungen in den Brühprogammen eingebbar. Eine automatische Aktualisierung über Internet oder dergleichen ist denkbar. Auch können Fernwartungsroutinen integriert werden.

Das vorliegende System stellt eine Vernetzung von Kaffeemaschine mit allen ihren Baugruppen und auch wenigstens einer zugehörigen Kaffeemühle dar. Die bei allen Baugruppen gewonnenen Daten werden miteinander verknüpft und so die optimalen Parameter ermittelt.

Eine automatische Erkennung von Baugruppen zum Beispiel über RFID ist denkbar. So kann beispielsweise eine Baugruppe freigegeben werden, wenn diese mit dem vorgesehenen Siebträger bestückt wird. Nur dann werden die vorgesehenen Bedienelemente freigegeben, während andere Bedienelemente, die zu einem schlechten Ergebnis führen könnten gesperrt bleiben.

Abgewandelte Versionen des erfindungsgemäßen Verfahrens sind denkbar.

So kann beispielsweise eine Version geschaffen werden, die nur anzeigt, welcher Siebträger eingesetzt werden sollte. Eine Kontrolle muss dabei nicht stattfinden.

Auch ist es denkbar, daß die Kaffeemühle die zentrale Steuereinrichtung ist, und dabei zumindest der Mahlgrad und die Kaffeemenge angepasst wird. Eine Vernetzung mit der Kaffeemaschine ist denkbar.

Es ist dabei sogar denkbar, daß Parameter von der Brühgruppe von Hand eingegeben werden müssen.

Auch ist es denkbar, daß die gesamte Steuerung in die Kaffeemaschine oder die Kaffeemühle integriert wird. Auch eine eigenständige Lösung, die nur die Daten von den einzelnen Gruppen erhebt ist denkbar.

Die Vernetzung kann über Kabel aber auch über Funk erfolgen.

Durch die Ermittlung und Steuerung aller Parameter kann auch durch ungeübte Personen ein qualitativ hochwertiges Getränk zubereitet werden. Zudem werden Umwelteinflüsse zum Beispiel durch Temperatur und Feuchtigkeitsmessungen kompensiert.

So kann auch im Kaffeevorrat ein Feuchtigkeitsmesser vorgesehen werden, der die Feuchtigkeit des Kaffees erfasst und unter Umständen auch mit der Umgebungsfeuchtigkeit korreliert.

## Patentansprüche

1. Verfahren zum Steuern und Überwachen des Brühvorganges von Siebträger-Kaffeemaschinen, **dadurch gekennzeichnet, daß** die Brühdauer und der Brühdruck und der Mahlgrad und die Kaffeemenge und die Wassermenge und die Brühtemperatur und der Tamper-Vorgang bezüglich Kraft und Dauer und zusätzlich fakultativ die Siebträgertemperatur überwacht werden und dabei diese Parameter angepasst werden können, wodurch durch die Anpassung der Brühvorgang auf ein vorgegebenes Optimum angenähert werden kann und daß die einzelnen Stationen einer Kaffeemaschine, mit wenigstens einem Siebträger und wenigstens einer Kaffeemühle, aufeinander abgestimmt werden, dass die Art des Siebträgers beim Einsetzen in die Kaffeemaschine erfasst und über eine Steuereinrichtung die Kaffeemaschine gesteuert wird, wobei der Siebträger mit einem programmierbaren Chip versehen ist, der im eingesetzten Zustand des Siebträgers in die Kaffeemaschine seine Art und seinen Platz meldet, dass die Steuereinrichtung die Mahlmenge und den Mahlgrad der Kaffeemühle erfasst und entsprechend den ermittelten Parametern steuert und dass der Siebträger-Chip den Mahlgrad und/oder die Mahlmenge beeinflusst.

2. Verfahren nach Anspruch 1, **dadurch gekennzeichnet, dass** ein Eingabe-Terminal vorgesehen ist, mit dem das zu erstellende Produkt auswählbar ist, wobei bei Eingabe des gewünschten Produktes der jeweils zu verwendende Siebträger angegeben werden kann.

3. Verfahren nach Anspruch 2, **dadurch gekennzeichnet, dass** bei Eingabe des gewünschten Produktes angegeben wird, welcher Kaffeemühle bzw. welchem Kaffee-Vorrat der Siebträger zuzuordnen ist.

4. Verfahren nach einem der vorhergehenden Ansprüche, **dadurch gekennzeichnet, dass** eine Steuereinrichtung vorgesehen ist, welche bei Auswahl des gewünschten Produktes und Einsatz des notwendigen Siebträgers die für das Produkt vorgesehenen Parameter steuert.

5. Verfahren nach einem der vorhergehenden Ansprüche, **dadurch gekennzeichnet, dass** externe Parameter, wie Luftfeuchtigkeit, Raumtemperatur, Nutzung usw. erfasst und insbesondere den Mahlgrad und/oder die Mahlzeit, die Umdrehungszahl der Mühle bzw. die Mahlmenge und/oder die Aufheizung steuern, wobei kurz- und langfristige Schwankungen erfasst werden können.

6. Verfahren nach einem der vorhergehenden Ansprüche, **dadurch gekennzeichnet, daß** ein Vorbrühvorgang eingerichtet wird und/oder dass die Kaffee-Vorräte überwacht werden, wobei zur Überwachung des Kaffeevorrates eine Lichtschranke oder dgl. vorgesehen sein und/oder dass zur Überwachung des Kaffeevorrates die Laufzeit und/oder die Umdrehungszahl der Kaffeemühle ermittelt werden kann.

7. Verfahren nach einem der vorhergehenden Ansprüche, **dadurch gekennzeichnet, dass** zum Einstellen des Mahlgrades Servomotoren vorgesehen sind, mit denen der Abstand der Mahlmesser eingestellt werden kann.

8. Verfahren nach einem der vorhergehenden Ansprüche, **dadurch gekennzeichnet, dass** die Laufzeiten und/oder die Umdrehungszahlen der Kaffeemühlen erfasst werden und in Abhängigkeit hiervon eine Reinigung der Mühle eingeleitet wird.

9. Verfahren nach einem der vorhergehenden Ansprüche, **dadurch gekennzeichnet, dass** die Ausgabe-Einheiten automatisch gereinigt werden, wobei als Parameter hierfür die Anzahl der Ausgabe-Vorgänge und/oder die Zeit seit der letzten Reinigung herangezogen wird.

10. Verfahren nach einem der vorhergehenden Ansprüche, **dadurch gekennzeichnet, dass** die Laufzeit, die Zahl der Umdrehungen und/oder die Anzahl der Mahlvorgänge erfasst und in Abhängigkeit hiervon ein notwendiger Austausch der Mahlwerkzeuge signalisiert wird.

11. Verfahren nach einem der vorhergehenden Ansprüche, **dadurch gekennzeichnet, dass** unterschiedliche Zugangsberechtigungen für die Kaffeemaschine vorgesehen sind.

12. Verfahren nach einem der vorhergehenden Ansprüche, **dadurch gekennzeichnet, daß** ein Abrechnungssystem direkt in die Steuereinrichtung integriert ist und/oder von dieser angesteuert wird.

## Claims

1. Method of controlling and monitoring the brewing process of filter holder coffee machines, **characterised in that** the duration of brewing, the brewing pressure, the grinding fineness, the coffee quantity, the water quantity, the brewing temperature and the tamper process are monitored with respect to force and duration and optionally also the filter holder temperature and **in that** case these parameters can be adapted, whereby through the adaptation the brewing process can be approximated to a predetermined optimum and that the individual stations of a coffee machine, with at least one filter holder and at least one coffee grinder, are matched to one another, that the kind of filter holder when inserted into the coffee machine is detected and the coffee machine is controlled by way of a control device, wherein the filter holder is provided with a programmable chip which in the inserted state of the filter holder in the coffee machine reports its kind and its position, that the control device detects the grinding amount and the grinding fineness of the coffee grinder and correspondingly controls the determined parameters and that the filter holder chip influences the grinding fineness and/or the grinding amount.

2. Method according to claim 1, **characterised in that** an input terminal by which the product to be created is selectable is provided, wherein on input of the desired product the respective filter holder to be used can be indicated.

3. Method according to claim 2, **characterised in that** on input of the desired product there is indication of the coffee grinder or coffee reserve with which the filter holder is to be associated.

4. Method according to any one of the preceding claims, **characterised in that** a control device is provided which on selection of the desired product and use of the necessary filter holder controls the parameters provided for the product.

5. Method according to any one of the preceding claims, **characterised in that** external parameters such as humidity, room temperature, utilisation, etc., are detected and control, in particular, the grinding fineness and/or the grinding time, the rotational speed of the grinder or the grinding amount and/or the heating, wherein short-term and long-term fluctuations can be detected.

6. Method according to any one of the preceding claims, **characterised in that** a pre-brewing process is provided and/or the coffee reserves are monitored, wherein a light barrier or the like can be provided for monitoring the coffee reserve and/or the running time and/or the rotational speed of the coffee grinder can be detected for monitoring the coffee reserve.

7. Method according to any one of the preceding claims, **characterised in that** servomotors by which the spacing of the grinding knives can be set are provided for setting the degree of grinding.

8. Method according to any one of the preceding claims, **characterised in that** the running times and/or the rotational speeds of the coffee grinders are detected and cleaning of the grinders is initiated in dependence thereon.

9. Method according to any one of the preceding claims, **characterised in that** the delivery units are automatically cleaned, wherein the number of delivery processes and/or the time since the last cleaning is or are used as parameters for that purpose.

10. Method according to any one of the preceding claims, **characterised in that** the running time, number of revolutions and/or number of grinding processes is or are detected and a necessary change of the grinding tools is signalled in dependence thereon.

11. Method according to any one of the preceding claims, **characterised in that** different access authorisations for the coffee machine are provided.

12. Method according to any one of the preceding claims, **characterised in that** a billing system is directly integrated in the control device and/or activated by this.

## Revendications

1. Procédé de commande et de surveillance du processus de brassage de machines à café équipées de porte-filtres, **caractérisé par le fait qu'**il s'opère une surveillance de la durée de brassage, de la pression de brassage, de la finesse de la mouture, de la quantité de café, de la quantité d'eau, de la température de brassage, de la force et de la durée du processus de tassement et additionnellement, en option, de la température du porte-filtres, ces paramètres pouvant être adaptés, de sorte que l'adaptation du processus de brassage permet de se rapprocher d'un optimum préétabli ; **par le fait que** les postes individuels d'une machine à café, comprenant au moins un porte-filtres et au moins un moulin à café, sont mutuellement coordonnés ; **par le fait que** le type du porte-filtres est détecté lors de l'introduction dans la machine à café et ladite machine à café est commandée par l'intermédiaire d'un dispositif de commande, sachant que ledit porte-filtres est muni d'une puce programmable qui mentionne le type et l'emplacement dudit porte-filtres lorsque ce dernier est à l'état inséré dans ladite machine à café ; **par le fait que** ledit dispositif de commande détecte la quantité de mouture et la finesse de la mouture du moulin à café, puis les commande en concordance avec les paramètres spécifiés ; et **par le fait que** ladite puce du porte-filtre influence ladite finesse de la mouture et/ou ladite quantité de mouture.

2. Procédé selon la revendication 1, **caractérisé par** la présence d'un terminal de saisie par lequel le produit à élaborer peut être sélectionné, sachant que le porte-filtres, devant être respectivement utilisé, peut être indiqué lors de la saisie du produit souhaité.

3. Procédé selon la revendication 2, **caractérisé par** une indication, lors de la saisie du produit souhaité, du type de moulin à café ou, respectivement, de la réserve de café auquel (à laquelle) le porte-filtres doit être affecté.

4. Procédé selon l'une des revendications précédentes, **caractérisé par** la présence d'un dispositif de commande qui, lors de la sélection du produit souhaité et de l'utilisation du porte-filtres nécessaire, commande les paramètres prévus pour ledit produit.

5. Procédé selon l'une des revendications précédentes, **caractérisé par le fait que** des paramètres extérieurs tels que l'humidité de l'air, la température ambiante, l'usure, etc., sont détectés et commandent, en particulier, la finesse de la mouture et/ou le temps de broyage, la vitesse de rotation du moulin ou, respectivement, la quantité de mouture et/ou le chauffage, des fluctuations à court et à long termes pouvant alors être détectées.

6. Procédé selon l'une des revendications précédentes, **caractérisé par** l'instauration d'un processus de brassage préalable ; et/ou par le fait que les réserves de café sont surveillées, une barrière photoélectrique ou un élément similaire pouvant être prévu(e) pour surveiller la réserve de café ; et/ou par le fait que le temps de fonctionnement et/ou la vitesse de rotation du moulin à café peu(ven)t être spécifié(e)(s) en vue de surveiller ladite réserve de café.

7. Procédé selon l'une des revendications précédentes, **caractérisé par le fait que** des servomoteurs, par lesquels l'espacement des lames de broyage peut être ajusté, sont prévus pour régler la finesse de la mouture.

8. Procédé selon l'une des revendications précédentes, **caractérisé par** une détection des temps de fonctionnement et/ou des vitesses de rotation des moulins à café, en fonction desquel(le)s un nettoyage du moulin est activé.

9. Procédé selon l'une des revendications précédentes, **caractérisé par le fait que** les unités de distribution sont nettoyées automatiquement, le nombre des processus de distribution, et/ou le temps écoulé depuis le dernier nettoyage, étant des paramètres auxquels il est recouru à cette fin.

10. Procédé selon l'une des revendications précédentes, **caractérisé par** une détection du temps de fonctionnement, du nombre de tours et/ou du nombre des processus de broyage, en fonction duquel (desquels) un nécessaire remplacement des outils de broyage est signalé.

11. Procédé selon l'une des revendications précédentes, **caractérisé par le fait que** différentes autorisations d'accès à la machine à café sont prévues.

12. Procédé selon l'une des revendications précédentes, **caractérisé par le fait qu'**un système de facturation est directement intégré dans le dispositif de commande, et/ou est piloté par ce dernier.
